# EUROPÄISCHE PATENTSCHRIFT

(11) **EP 0 529 405 B1**
(45) Veröffentlichungstag und Bekanntmachung des Hinweises auf die Patenterteilung: **13.12.1995**
(21) Anmeldenummer: 92113716.2
(22) Anmeldetag: 12.08.1992
(51) Int. Cl.: B25D 17/00, H01H 13/18, F16B 31/02

(54) **Fluidbetriebenes Schlagwerk mit Sicherheitseinrichtung**
Fluid powered percussion mechanism with safety device
Mécanisme à coup actionné hydrauliquement avec dispositif de sécurité

(30) Priorität: 24.08.1991 DE 4128137
(43) Veröffentlichungstag der Anmeldung: 03.03.1993
(73) Patentinhaber: KRUPP MASCHINENTECHNIK GESELLSCHAFT MIT BESCHRÄNKTER HAFTUNG, 45143 Essen (DE)
(72) Erfinder: Bartels, Robert-Jan, Dr.-Ing., W-4300 Essen 17 (DE); Vielhaber, Heribert, W-4300 Essen 1 (DE)

(56) Entgegenhaltungen:
- EP-A- 0 353 634
- GB-A- 597 864
- US-A- 3 736 394
- US-A- 4 593 264

## Beschreibung

Die Erfindung betrifft ein fluidbetriebenes Schlagwerk, insbesondere Hydraulikhammer, mit mehrteiligem Gehäuse, dessen Gehäuseabschnitte mittels Spannelementen aneinander befestigt sind, mit einer Sicherheitseinrichtung zur Überwachung des Zustands dieser Spannelemente.

Fluidbetriebene Schlagwerke sind heutzutage gehäuseseitig zumindest überwiegend mit mehreren Gehäuseabschnitten ausgestattet, die mittels aufwendiger, besonders angepaßter Spannelemente in Form von Spannbolzen, Spannschrauben oder Spannstangen aneinander befestigt sind. Die nicht ordnungsgemäße Funktion eines Spannelements, insbesondere der Ausfall eines Spannelements durch Bruch, kann die Beschädigung der anderen Spannelemente und auch den Ausfall des Schlagwerks selbst zur Folge haben. Unter Umständen müssen anstelle des unmittelbar betroffenen Spannelements sämtliche Spannelemente mit einem erheblichen Zeit- und Kostenaufwand ausgewechselt werden, wobei das Schlagwerk naturgemäß nicht einsatzbereit ist. Zur Begrenzung des Ausmaßes derartiger Folgeschäden ist bereits der Vorschlag unterbreitet worden, Schlagwerke mit einer Sicherheitseinrichtung in Form einer Schadensanzeige auszustatten (Prospekt AXECO news 1990/91 der Fa. AXECO S. p. A., Volpiano/Italien). Falls an einem der Spannelemente eine Störung auftritt, wird diese durch eine nach außen austretende Leckage für die Bedienungsperson erkennbar gemacht mit der Möglichkeit, das Schlagwerk stillzusetzen.
Die bekannte Sicherheitseinrichtung ist hinsichtlich ihrer Wirksamkeit von den Einsatzbedingungen und der Aufmerksamkeit der Bedienungsperson abhängig, unter dem Gesichtspunkt der sich aus der Leckage ergebenden Umweltbelastung wenig zufriedenstellend und beispielsweise bei Einsetzen des Schlagwerks unter Wasser unwirksam.

Aus der Druckschrift US-A-3,736,394 ist eine Sicherheitseinrichtung für zwei mittels eines Spannelements aneinander befestigte Platten bekannt, bei welcher ein in Längsrichtung des Spannelements bewegliches Tastelement zumindest zeitweilig der zugehörigen Anlagefläche nachgeführt wird. Diese stützt sich in der bestimmungsgemäßen Ausgangsstellung des Spannelements über eine dünne Unterlegscheibe an dem Spannelement selbst ab. Das Tastelement ist im übrigen über die bereits erwähnte dünne Unterlegscheibe und eine Faserschicht bezüglich des Spannelements unbeweglich an diesem befestigt.

Der Erfindung liegt die Aufgabe zugrunde, gattungsgemäße Schlagwerke mit einer Sicherheitseinrichtung zu entwickeln, die bei vertretbarem Aufwand und angemessener Betriebssicherheit den Anforderungen der Praxis und des Umweltschutzes gerecht wird.
Die Sicherheitseinrichtung soll erforderlichenfalls auch in der Weise ausgestaltet sein können, daß das Schlagwerk im Störfall selbsttätig stillgesetzt wird.

Die gestellte Aufgabe wird durch eine Vorrichtung mit den Merkmalen des Anspruchs 1 gelöst.
Der Grundgedanke der Erfindung besteht dabei darin, zumindest einem Spannelement (welches zumindest zwei Gehäuseabschnitte miteinander verspannt) einen Sensor zuzuordnen, dessen Tastelement zumindest in der bestimmungsgemäßen Betriebsstellung des Spannelements relativ zu diesem in dessen Längsrichtung beweglich zumindest mittelbar unter Vorspannung an diesem in Anlage gehalten ist. Jeder Sensor ist derart ausgebildet und angeordnet, daß sein Tastelement zwischen einer der Betriebsstellung entsprechenden Ausgangsstellung und einer Störstellung beweglich ist.
Dabei ist jedes Spannelement in Längsrichtung derart bezüglich des Gehäuses (d. h. bezüglich der mitttels der Spannelemente aneinanderzubefestigenden Gehäuseabschnitte) abgestützt, daß eine sich in Längsrichtung des Spannelements auswirkende Störung eine gleichgerichtete Bewegung einer Anlagefläche zur Folge hat, die sich in der Ausgangsstellung an dem Gehäuse abstützt und an welcher das Tastelement in der Ausgangsstellung anliegt sowie - ausgehend von dieser - zumindest zeitweilig der Anlagefläche nachführbar ist. Die Störfall-Bewegung des Tastelements löst einen Schaltvorgang aus, welcher das Stillsetzen des Schlagwerks ermöglicht.
Der mit der Erfindung erzielte Vorteil besteht also darin, daß eine Verschiebung der mit einem Spannelement verbundenen Anlagefläche für das Tastelement in eine von der ordnungsgemäßen Betriebsstellung abweichende Lage einen Schaltvorgang auslöst, welcher eine Information über das Vorliegen einer Störung an dem zugehörigen Spannelement darstellt. Diese Information versetzt beispielsweise eine Bedienungsperson in die Lage, das Schlagwerk unter dem Gesichtspunkt der Vermeidung weiterer Folgeschäden von Hand stillzusetzen.

Unter Umständen ist es bereits ausreichend, einem Spannelement einen Sensor in der Weise zuzuordnen, daß die ordnungsgemäße Betriebsstellung dieses Spannelements überwacht werden kann.
Die Überwachung läßt sich erforderlichenfalls dadurch verbessern, daß jeweils mehreren Spannelementen - über welche jeweils dieselben Gehäuseabschnitte aneinander befestigt sind - Sensoren zugeordnet sind. Eine derartige Ausführungsform läßt sich vorteilhaft in der Weise verwirklichen, daß zumindest zwei der betreffenden Spannelemente, die sich bezüglich der Gehäuse-Längsachse diagonal gegenüberliegen, Sensoren zugeordnet sind.
Für Ausführungsformen, deren Gehäuseabschnitte - in Längsrichtung des Gehäuses gesehen - aufeinanderfolgend jeweils mit mehreren Spannelementen ausgestattet sind, gilt Entsprechendes: Auch in diesem Fall ist jeweils zumindest eines der Spannelemente, welche jeweils dieselben Gehäuseabschnitte miteinander verbinden, mit einem Sensor ausgestattet; dieser überwacht jeweils die Funktion zumindest eines der in Gehäuse-Längsrichtung aufeinanderfolgenden Spannelemente.
Falls also beispielsweise drei Gehäuseabschnitte in Gehäuse-Längsrichtung mit zwei Spannelementen ausgestattet sind, ist zweckmäßigerweise zumindest jeweils einem der Spannelemente, welche jeweils den ersten mit dem zweiten Gehäuseabschnitt bzw. diesen mit dem dritten Gehäuseabschnitt verbinden, ein Sensor zugeordnet.
Bei einer besonders betriebssicheren Ausgestaltung des Erfindungsgegenstandes stimmt die Anzahl der Sensoren mit derjenigen der Spannelemente überein, d. h. jedem Spannelement ist ein Sensor zugeordnet (Anspruch 2).

Der Sensor nebst Tastelement kann beliebig ausgebildet sein. Im einfachsten Fall ist das Tastelement Bestandteil eines Umschalters (d. h. eines Ein-/Aus-Schalters), über den in der Störstellung eine Energiequelle zu- oder abschaltbar ist (Anspruch 3).
Die Energiequelle kann insbesondere elektrischer oder hydraulischer Natur sein; der Sensor bzw. Umschalter kann insbesondere auch als Ventil ausgebildet sein. Die Verwendung eines Sensors zur Beeinflussung einer elektrischen Energiequelle weist dabei den Vorteil auf, daß sich etwaige Störsignale in einfacher Weise und ohne Beeinträchtigung der Umwelt auch über größere Entfernungen übermitteln lassen.

Der Erfindungsgegenstand kann in der Weise weitergebildet sein, daß mit der Bewegung des Tastelements in die Störstellung ein für eine Bedienungsperson erkennbares Störsignal auslösbar ist (Anspruch 4).
Das Störsignal kann dabei insbesondere optisch und/oder akustisch angezeigt werden.

Eine von der Aufmerksamkeit der Bedienungsperson unabhängig arbeitende Sicherheitseinrichtung läßt sich in der Weise verwirklichen, daß mit der Bewegung des Tastelements in die Störstellung die Zufuhr der Antriebsenergie für den Betrieb des Schlagwerks unterbrochen wird (Anspruch 5). Insbesondere kann dem Sensor ein Absperrventil nachgeschaltet sein, welches in die Druckleitung für das Schlagwerk eingebaut ist und aufgrund eines vom Sensor erzeugten Störsignals (hervorgerufen durch die Bewegung des Tastelements in die Störstellung) in die Sperrstellung umgeschaltet wird.

Um sicherzustellen, daß eine an einem Spannelement auftretende Störung auch erfaßt wird, stützt sich die Anlagefläche an dem Gehäuse über ein Gegenhalteelement ab, wobei die von diesem erzeugte Gegenhaltekraft der von dem Spannelement ausgehenden Spannkraft entgegengerichtet ist (Anspruch 6).
Das jedem Spannelement zugeordnete Gegenhalteelement kann insbesondere als vorgespannte mechanische Feder (beispielsweise in Gestalt eines Federpakets) oder als hydraulische Feder ausgebildet sein.

Abhängig von der Art und Weise der Abstützung der Spannelemente an dem Gehäuse und/oder der Ausbildung des jeweils zugehörigen Gegenhalteelements kann der Erfindungsgegenstand in der Weise ausgebildet sein, daß das Tastelement jedes Sensors sich an dem letzten Gehäuseabschnitt befindet, an dem das zugehörige Spannelement befestigt ist und welcher auf der vom Werkzeug-Einsteckende abgewandten oder diesem zugewandten Seite des Gehäuses liegt (Anspruch 7 bzw. 8).
Falls das Tastelement gemäß Anspruch 8 angeordnet ist, kann ggf. auf die Verwendung von Gegenhalteelementen abgesehen werden; dies setzt mit Rücksicht auf die Betriebssicherheit der Sicherheitseinrichtung allerdings voraus, daß das Schlagwerk während seines Betriebes eine Lage mit zumindest nach unten geneigtem Werkzeug einnimmt. Falls also das Schlagwerk eine ausreichende Neigung aufweist, führt die mit dem von einer Störung betroffenen Spannelement verbundene Anschlagfläche unter dem Einfluß der Schwerkraft bezüglich des Gehäuses eine nach unten gerichtete Bewegung aus, welche über das zugeordnete Tastelement ein Störsignal auslöst.
Bei einer derartigen Ausführungsform können die Tastelemente, die im Bereich des unteren zu befestigenden Gehäuseabschnitts angeordnet sind, oberhalb oder unterhalb der Anschlagflächen an diesen in Anlage gehalten sein. Es versteht sich von selbst, daß erforderlichenfalls zusätzlich Gegenhalteelemente zum Einsatz kommen können, deren Gegenhaltekraft im Störungsfall die auf das Tastelement übertragene Störfall-Bewegung herbeiführt bzw. unterstützt.

Im Rahmen des erfindungsgemäßen Lösungsgedankens kann das Tastelement auch Bestandteil eines Ventilschiebers sein, der entgegen der Spannrichtung des zugehörigen Spannelements mit einer Haltekraft beaufschlagt ist und der anläßlich der Störfall-Bewegung des Tastelements eine Verbindung zwischen zwei Kanälen entweder herstellt oder unterbricht (Anspruch 9). Die Änderung des Betriebszustandes, welche durch die Herstellung oder Unterbrechung der Verbindung zwischen den beiden Kanälen hervorgerufen wird, stellt eine Information dar, welche das Vorliegen eines Störfalls erkennbar macht.
Die in Rede stehende Ausführungsform kann dadurch weiterausgestaltet sein, daß der Ventilschieber neben der Spannelement-Bohrung angeordnet im Gehäuse geführt ist und das Tastelement an der Auflage anliegt, über welche sich das Spannelement in Spannrichtung am Gehäuse abstützt (Anspruch 10).

Die Haltekraft, unter deren Einwirkung das Tastelement an der Auflage des Spannelements in Anlage gehalten wird, läßt sich im einfachsten Fall mittels eines Federelements erzeugen. Der Erfindungsgegenstand kann jedoch auch derart ausgebildet sein, daß der Ventilschieber auf der vom Tastelement abgewandten Seite mittels eines Fluids druckbeaufschlagt und gegen das Gehäuse abgedichtet ist (Anspruch 11). Als Fluid kommt dabei zweckmäßigerweise das das Schlagwerk antreibende Druckmittel in Frage.

Die Erfindung wird nachfolgend anhand der Zeichnung im einzelnen erläutert.
Es zeigen:
- Fig. 1: schematisiert in Schrägansicht den gehäuseseitigen Aufbau eines Hydraulikhammers,
- Fig. 2: als Explosionsdarstellung den Aufbau eines Spannelements nebst Zubehör,
- Fig. 3: schematisiert einen Schaltplan für ein mit vier Spannelementen ausgestattetes Gehäuse (gemäß Fig. 1),
- Fig. 4: in verändertem Maßstab einen Teilschnitt durch den oberen Gehäuseabschnitt gemäß Fig. 1, an dem sich ein Spannelement unter Zwischenschaltung eines vorgespannten Gegenhalteelements abstützt,
- Fig. 5: in verändertem Maßstab einen Teilschnitt durch den unteren Gehäuseabschnitt gemäß Fig. 1, an dem sich ein Spannelement unter Zwischenschaltung eines vorgespannten Gegenhalteelements abstützt,
- Fig. 6: in verändertem Maßstab einen Teilschnitt durch das in Fig. 1 dargestellte Gehäuse mit einer Sicherheitseinrichtung in Gestalt eines Ventilschiebers und
- Fig. 7: schematisiert einen Schaltplan für die Ausführungsform gemäß Fig. 6, wobei aus Gründen der Übersichtlichkeit lediglich ein Ventilschieber dargestellt ist.

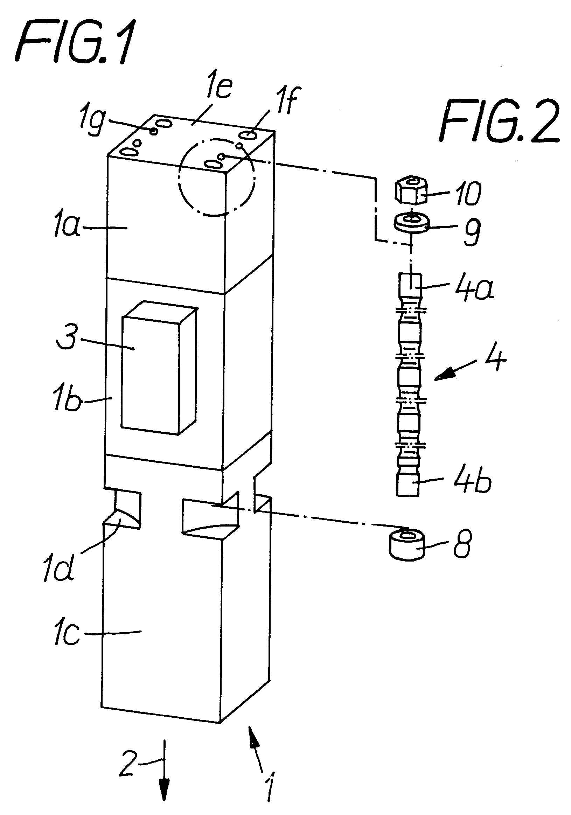

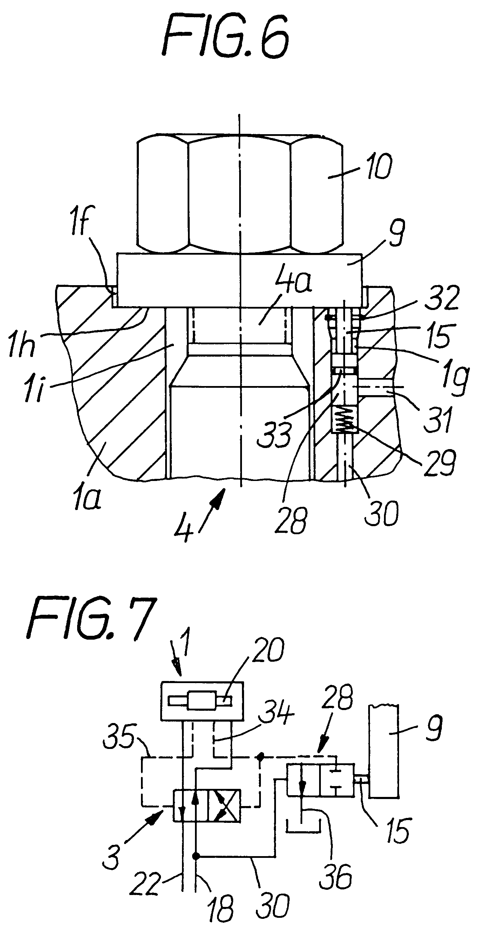

Das Gehäuse 1 des in Fig. 1 dargestellten Hydraulikhammers weist - in Schlagrichtung (Pfeil 2) gesehen - drei im Betriebszustand aneinander befestigte Gehäuseabschnitte auf, nämlich einen Deckel 1a, ein Schlagkolbengehäuse 1b und ein Führungsgehäuse 1c, in dem sich beispielsweise ein Werkzeug-Einsteckende oder ein Meißel abstützt. Das Schlagkolbengehäuse 1b nimmt im wesentlichen den nicht dargestellten, in Längsrichtung hin- und herbewegten Schlagkolben auf und trägt außerdem eine Steuerung 3, welche in an sich bekannter Weise die Bewegung des Schlagkolbens steuert.
Zur Befestigung aneinander sind die Gehäuseabschnitte 1a bis 1c im Eckbereich mit vier Längsbohrungen ausgestattet, die im Bereich des Führungsgehäuses 1c in dreieckförmige Ausnehmungen 1d einmünden.
An der nach oben gerichteten Stirnfläche 1e des Deckels 1a sind jeweils vier Einsenkbohrungen 1f und diesen jeweils zugeordnete Aufnahmebohrungen 1g für noch zu beschreibende Sensoren erkennbar (vgl. dazu Fig. 6).

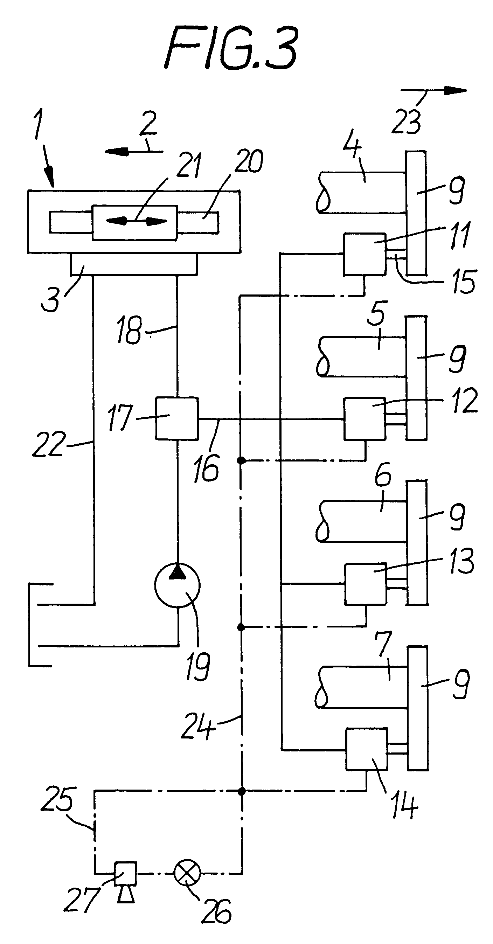

Zur Befestigung der Gehäuseabschnitte 1a bis 1c aneinander sind vier Spannelemente in Form von Spannbolzen 4 bis 7 vorgesehen (vgl. dazu Fig. 3). Diese sind - wie Fig. 2 beispielhaft für den Spannbolzen 4 erkennen läßt - jeweils mit einem oberen und unteren Gewindeabschnitt 4a, 4b ausgestattet.
In eingebautem Zustand stützt sich jeder Spannbolzen einerseits über eine Rundmutter 8 in einer Ausnehmung 1d des Gehäuseabschnitts 1c und andererseits unter Zwischenschaltung eines Stützrings 9 unter Einwirkung einer Sechskantmutter 10 an dem Deckel 1a ab. Die Stützringe 9 liegen dabei auf einer geeigneten Fläche auf, beispielsweise auf der in Fig. 6 dargestellten Grundfläche 1h der jeweils zugehörigen Einsenkbohrung 1f.

Da die Spannbolzen infolge hoher Beanspruchung von Zeit zu Zeit durch Bruch ausfallen, ist es - auch unter dem Gesichtspunkt der Vermeidung eventuell schwerwiegender Folgeschäden - erforderlich, ihren Zustand mittels geeigneter Einrichtungen zu überwachen.

Zu diesem Zweck ist jedem Spannbolzen 4 bis 7 (vgl. Fig. 3) ein Sensor in Gestalt eines Umschalters 11, 12, 13 bzw. 14 zugeordnet, dessen Tastelement 15 vorgespannt an dem jeweils zugehörigen Stützring 9 in Anlage gehalten ist. Jeder Umschalter 11 bis 14 ist dabei in der bereits erwähnten Aufnahmebohrung 1g befestigt, die - seitlich neben der Längsbohrung 1i für den zugehörigen Spannbolzen liegend - von der Einsenkbohrung 1f ausgeht (vgl. Fig. 6). Sämtliche Umschalter sind ausgangsseitig über eine Steuerleitung 16 mit einem Absperrventil 17 verbunden, welches in eine Druckleitung 18 eingebaut ist. Über diese wird der Hydraulikhammer mittels einer Pumpe 19 mit Druckenergie versorgt mit der Folge, daß der innerhalb des Gehäuses 1 gehaltene Schlagkolben 20 unter Einwirkung der Steuerung 3 Bewegungen in Richtung des Doppelpfeils 21 ausführt. Die drucklose Rücklaufleitung des Hydraulikhammers ist mit 22 bezeichnet.

Solange sich die Spannbolzen 4 bis 7 und die an diesen befestigten Stützringe 9 in der ordnungsgemäßen Betriebsstellung befinden, nimmt das Absperrventil 17 die Durchlaßstellung ein, so daß der Hydraulikhammer nach Einschalten der Pumpe betriebsbereit ist.
Bei Ausfall eines Spannbolzens durch Bruch verschiebt sich dessen Stützring 9 in der Darstellung nach rechts, wobei das Tastelement des zugeordneten Umschalters zumindest zeitweilig eine gleichgerichtete Störfall-Bewegung in Richtung des Pfeiles 23 ausführt. Mit dem Erreichen einer vorgegebenen Störstellung des Tastelements löst der betreffende Umschalter über die Steuerleitung 16 ein Störsignal aus, welches eine Verschiebung des Absperrventils 17 in die Sperrstellung und damit das Stillsetzen des Schlagwerks zur Folge hat.
Die in Rede stehende Ausführungsform ermöglicht es also, das Schlagwerk selbsttätig stillzusetzen, falls einer der Spannbolzen 4 bis 7 durch Bruch ausfällt.
Abhängig davon, wie feinfühlig der den Schaltvorgang auslösende Schaltweg der Umschalter 11 bis 14 eingestellt ist, kann die erfindungsgemäße Sicherheitseinrichtung auch dazu eingesetzt werden, bereits geringfügige Verschiebungen der Stützringe 9 - hervorgerufen beispielsweise durch eine Lockerung der Sechskantmutter 10 (vgl. dazu Fig. 1 und Fig. 6) - erkennbar zu machen.

Alternativ oder zusätzlich zu der zuvor beschriebenen Ausführungsform, mittels welcher der Hydraulikhammer im Störfall über das Absperrventil 17 abschaltbar ist, kann die Sicherheitseinrichtung auch in der Weise ausgestaltet sein, daß der nicht ordnungsgemäße Zustand eines der Spannbolzen 4 bis 7 nach außen für eine Bedienungsperson erkennbar gemacht wird.
Dies läßt sich gemäß Fig. 3 dadurch verwirklichen, daß die Umschalter 11 bis 14 über eine Signalleitung 24 mit einem Schaltkreis 25 in Verbindung stehen, der mit zwei Anzeigeeinheiten in Gestalt einer Signallampe 26 und eines Signalhorns 27 ausgestattet ist. Dementsprechend wird mit der Bewegung zumindest eines Tastelements 15 in die Störstellung gleichzeitig ein optisches und akustisches Störsignal ausgelöst, welches die Bedienungsperson in die Lage versetzt, den Hydraulikhammer durch Eingriff in dessen Energiekreislauf stillzusetzen.
Es versteht sich von selbst, daß der Schaltkreis 25 auch nur eine der beiden Anzeigeeinheiten 26 und 27 aufweisen kann.

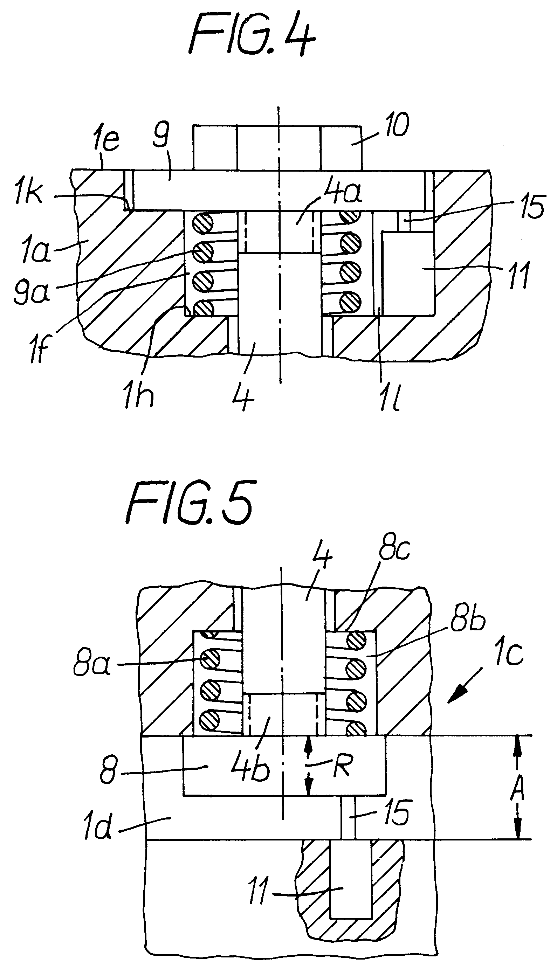

Um sicherzustellen, daß der Stützring 9 des in Fig. 4 beispielhaft dargestellten Spannbolzens 4 beispielsweise im Falle eines Bruches eine Bewegung ausführt, welcher das Tastelement 15 des zugehörigen Umschalters 11 nachfolgt und dadurch ein Störsignal auslöst, liegt der Stützring 9 gleichzeitig auf einem Absatz 1k oberhalb der Grundfläche 1h der Einsenkbohrung und auf einem Gegenhalteelement in Gestalt einer vorgespannten Schraubenfeder 9a auf, die sich auf der Grundfläche 1h abstützt. Die von der Schraubenfeder 9a erzeugte Gegenhaltekraft ist der von dem Spannbolzen 4 ausgehenden Spannkraft entgegengerichtet und so bemessen, daß sie im Störfall den Stützring 9 nebst Sechskantschraube 10 und den daran befestigten Teil des Spannbolzens 4 relativ zum Gehäuseabschnitt 1a (d. h. in der Darstellung nach oben) verschieben kann.
Abweichend von der Ausführungsform gemäß Fig. 1 ist der zugehörige Umschalter 11 nebst Tastelement 15 in einer Ausnehmung 1l des Absatzes 1k in der Einsenkbohrung 1f aufgenommen.
Eine Beschädigung des Sensors 11 bei der Befestigung des Spannbolzens 4 wird dadurch verhindert, daß der in der Einsenkbohrung 1f angebrachte Absatz 1k den Bewegungsspielraum des Stützrings 9 in Richtung auf die Grundfläche 1h begrenzt. Mit anderen Worten ausgedrückt, kann der Spannbolzen 4 - entgegen der Rückstellkraft der vorgespannten Schaubenfeder 9a - nur soweit in Richtung auf die Grundfläche 1h vorgespannt werden, bis der an ihn befestigte Stützring 9 auf dem Absatz 1k zur Anlage gekommen ist.

Bei der in Rede stehenden Ausführungsform (gemäß Fig. 4) sind die übrigen Spannbolzen 5, 6 und 7 (vgl. dazu Fig. 3) in entsprechender Weise mit Gegenhalteelementen ausgestattet.

Der Erfindungsgegenstand kann auch in der Weise ausgebildet sein, daß die den Spannbolzen zugeordneten Umschalter sich über ihre Tastelemente 15 auch an der in der Ausnehmung 1d liegenden Rundmutter 8 abstützen: Dies hat zur Folge, daß eine Verschiebung der Rundmutter 8 im Störfall eine Bewegung des betreffenden Tastelements 15 zur Folge hat und dadurch ein Störsignal auslöst.
Bei der Ausführungsform gemäß Fig. 5 stützt sich die Rundmutter 8 des beispielhaft dargestellten Spannbolzens 4 über ein Gegenhalteelement in Gestalt einer vorgespannten Schraubenfeder 8a oberhalb der Ausnehmung 1d an dem unteren zu befestigenden Gehäuseabschnitt 1c ab. Der Durchmesser der Rundmutter 8 ist dabei größer bemessen als der Durchmesser der oberhalb der Ausnehmung 1d angeordneten Bohrung 8b, welche die vorgespannte Schraubenfeder 8a aufnimmt; diese wird unter Einwirkung der Rundmutter 8 an der Stirnfläche 8c der Bohrung 8b in Anlage gehalten. Unterhalb der Ausnehmung ist in dem genannten Gehäuseabschnitt ein Umschalter 11 angebracht, dessen Tastelement 15 an der Rundmutter 8 in Anlage gehalten ist.
Der Spannbolzen 4 liegt weiterhin (in diesem Fall unter Fortfall der in Fig. 4 dargestellten Schraubenfeder 9a und des Absatzes 1k) über den zugehörigen Stützring 9 auf der Grundfläche 1h des oberen Gehäuseabschnitts 1a auf (vgl. dazu Fig. 4). Falls der Spannbolzen 4 zu Bruch geht, verschiebt sich die Rundmutter 8 unter Einwirkung der vorgespannten Schraubenfeder 8a in Richtung auf den Umschalter 11 und verschiebt dabei dessen Tastelement 15.
Die übrigen Spannbolzen 5 bis 7 (vgl. dazu Fig. 3) sind in entsprechender Weise mit vorgespannten Schraubenfedern 8a und entsprechend angeordneten Umschalter 12 bis 14 ausgestattet.

Abweichend von der zuletzt beschriebenen Ausführungsform können die Umschalter auch auf der anderen Seite der Rundmuttern 8 im Gehäuseabschnitt 1c angeordnet sein, so daß ihre Tastelemente 15 - ausgehend von ihrer Ausgangsstellung zumindest über einen vorgegebenen Verstellweg - an der Oberseite der Rundmuttern 8 anliegen.
Damit die Rundmuttern 8 im Störfall bezüglich des Gehäuseabschnitts 1c eine ausreichend bemessene Bewegung ausführen können, ist bei den in Frage kommenden Ausführungsformen die Höhe A der Ausnehmungen 1d in Längsrichtung der Spannbolzen zumindest um den erforderlichen Verstellweg der Tastelemente 15 größer bemessen als die Höhe R der Rundmuttern 8 (vgl. Fig. 5).

Falls sichergestellt ist, daß das Schlagwerk stets in einer Lage mit zumindest schräg nach unten geneigtem Werkzeug betrieben wird, kann unter Umständen auf die Verwendung der zuvor beschriebenen Gegenhalteelemente verzichtet werden, sofern sich die Tastelemente 15 an den dann unten liegenden Rundmuttern 8 in Anlage gehalten sind. Bei derartigen Ausführungsformen wird das betreffende Tastelement 15 im Störfall dadurch in seine Störstellung bewegt, daß sich die zugehörige Rundmutter 8 unter dem Einfluß der dann wirksam werdenden Schwerkraft bezüglich des Gehäuseabschnitts 1c verschiebt.

Abweichend von den zuvor beschriebenen Ausführungsformen kann das Tastelement 15 jedes Sensors auch Bestandteil eines Ventilschiebers 28 sein, der in der Aufnahmebohrung 1g parallel zum zugehörigen Spannbolzen (beispielsweise dem dargestellten Spannbolzen 4) beweglich geführt ist (Fig. 6).
Der Ventilschieber stützt sich auf der vom Tastelement 15 abgewandten Seite an einer vorgespannten Schraubenfeder 29 ab; diese erzeugt die Haltekraft, unter deren Einwirkung das Tastelement 15 - entgegen der Spannrichtung des Spannbolzens 4 - im Bereich der Einsenkbohrung 1f an der unteren Stirnfläche des zugehörigen Stützrings 9 in Anlage gehalten ist.
Der Ventilschieber 28 ist derart angeordnet und ausgebildet, daß er in der dargestellten Ausgangsstellung (entsprechend der ordnungsgemäßen Betriebsstellung des Spannbolzens 4) die Verbindung zwischen zwei Kanälen 30 und 31 innerhalb des Deckels 1a unterbricht.
Die Druckbeaufschlagung des Kanals 30 hat zur Folge, daß auf den Ventilschieber 28 eine in Richtung auf den Stützring 9 wirksame, hydraulische Gegenhaltekraft einwirkt. Diese stellt sicher, daß der Stützring und der daran befestigte Teil des Spannbolzens 4 im Störfall entgegen der von diesem ausgehenden Spannkraft mitgeführt wird.
Der Bewegungsspielraum des Ventilschiebers 28 in Richtung der Haltekraft ist durch einen Sicherungsring 32 begrenzt, der in der Nähe der Grundfläche 1h der Einsenkbohrung 1f in der dort erweiterten Aufnahmebohrung 1g befestigt ist.
Um die Entstehung einer Leckage zu vermeiden, weist der Ventilschieber 28 unterhalb seines Tastelements eine Dichtung in Form zumindest eines Dichtrings 33 auf, der sich nachgiebig in der Aufnahmebohrung 1g abstützt.

Falls der an dem Spannbolzen befestigte Stützring unter Einwirkung der an dem Stützring 9 angreifenden Gegenhaltekraft eine ausreichend bemessene Bewegung (in Fig. 6 nach oben) ausführt, bewegt sich der Ventilschieber 28 gleichgerichtet mit, wodurch schließlich eine Verbindung zwischen den beiden Kanälen 30 und 31 hergestellt wird. Die Herstellung dieser Verbindung, die beispielsweise eine Druckbeaufschlagung auch des Kanals 31 zur Folge hat, löst einen Schaltvorgang aus; dieser kann insbesondere darin bestehen, daß die in Fig. 3 dargestellten Bestandteile 17, 26 bzw. 27 in der bereits beschriebenen Weise wirksam werden.
Der Vorteil der in Rede stehenden Ausführungsform ist darin zu sehen, daß sich das Störsignal bei Verwendung einfacher Bauelemente auf hydraulischem Wege erzeugen läßt, ohne daß eine Beeinträchtigung der Umwelt durch eine Leckage zu befürchten ist.

In Fig. 7 ist schematisiert eine Ausführungsform des Erfindungsgegenstandes dargestellt, bei welcher sich der Hydraulikhammer im Störfall durch Eingriff in seine Steuerung 3 stillsetzen läßt.
Die Steuerung wird dabei in an sich bekannter Weise über Steuerleitungen 34, 35 wechselweise derart mit Druck beaufschlagt, daß der Schlagkolben 20 wechselweise in unterschiedlichen Richtungen mit Druck beaufschlagt ist. Die in Richtung auf den zugehörigen Stützring 9 wirksame Gegenhaltekraft wird über den Kanal 30 hervorgerufen, welcher an die Druckleitung 18 des Hydraulikhammers angeschlossen ist.
In der dargestellten Ausgangsstellung des Ventilschiebers 28 nimmt dieser die Sperrstellung ein, so daß er im Hinblick auf die Druckverhältnisse in der auch an ihn angeschlossenen Steuerleitung 34 unwirksam ist.
Im Störfall führt die Bewegung des Steuerschiebers 28 nach rechts dazu, daß dieser die Steuerleitung 34 mit einem drucklosen Auslaß 36 verbindet. Dies hat zur Folge, daß die einseitig druckentlastete Steuerung 3 keine Umschaltbewegung mehr ausführen kann und der Schlagkolben 20 dementsprechend zum Stillstand kommt. Auch die in Rede stehende Ausführungsform ermöglich also im Störfall eine selbsttätige Abschaltung des Hydraulikhammers.

Im Rahmen des erfindungsgemäßen Lösungsgedankens kann die Sicherheitseinrichtung auch mit einer kleineren Anzahl Sensoren ausgestattet sein mit der Maßgabe, daß zumindest einem Spannelement (welches mehrere Gehäuseabschnitte miteinander verbindet) ein Sensor zugeordnet ist: Danach kann beispielsweise lediglich dem in der Zeichnung dargestellten Spannbolzen 4 ein Sensor zugeordnet sein. Eine andere erfindungsgemäße Ausführungsmöglichkeit besteht darin, die sich bezüglich des Gehäuses 1 diagonal gegenüberliegenden Spannelemente - beispielsweise die Spannelemente 4 und 6 bzw. 5 und 7 gemäß Fig. 3 - mittels Sensoren zu überwachen.
Die Sicherheitseinrichtung kann jedoch auch an Schlagwerken zur Anwendung kommen, deren Gehäuseabschnitte über mehrere in Gehäuse-Längsrichtung aufeinanderfolgende Spannelemente (beispielsweise paarweise) aneinander befestigt sind. Falls also beispielsweise die Gehäuseabschnitte 1a und 1b einerseits und die Gehäuseabschnitte 1b und 1c andererseits jeweils mehrere sie aneinanderfesthaltende Spannelemente aufweisen, ist jeweils zumindest einem der Spannelemente für die Gehäuseabschnitte 1a und 1b bzw. 1b und 1c ein in der beschriebenen Weise wirksamer Sensor zugeordnet. Das zugehörige Tastelement dieser Sensoren stützt sich dabei entweder gemäß Fig. 4 an dem zugehörigen Stützring 9 oder gemäß Fig. 5 an der Rundmutter 8 ab, wobei die Teile 9 und 8 an verschiedenen Spannelementen befestigt sind.

Die fluidbetriebenen Schlagwerke selbst können beliebig ausgebildet sein, beispielsweise auch als Schlagdrehbohrvorrichtungen oder entsprechend ausgebildete Rammvorrichtungen.

## Patentansprüche

1. Fluidbetriebenes Schlagwerk, insbesondere Hydraulikhammer, mit mehrteiligem Gehäuse, dessen Gehäuseabschnitte mittels Spannelementen aneinander befestigt sind, mit einer Sicherheitseinrichtung zur Überwachung des Zustands dieser Spannelemente,
**dadurch gekennzeichnet,**
daß an zumindest einem Gehäuseabschnitt (1a) zumindest einem diesem zugehörigen Spannelement (4, 5, 6 bzw. 7) ein Sensor (11 bis 14 bzw. 28) zugeordnet ist, dessen Tastelement (15) zumindest in der bestimmungsgemäßen Betriebsstellung des Spannelements relativ zu diesem in dessen Längsrichtung beweglich und zumindest mittelbar unter Vorspannung an diesem in Anlage gehalten ist;
daß jeder Sensor (11 bis 14 bzw. 28) derart ausgebildet und angeordnet ist, daß sein Tastelement (15) zwischen einer der Betriebsstellung entsprechenden Ausgangsstellung und einer Störstellung beweglich ist;
daß jedes Spannelement (4, 5, 6 bzw. 7) in Längsrichtung derart bezüglich des Gehäuses (1) abgestützt ist, daß eine sich in Längsrichtung des Spannelements auswirkende Störung eine gleichgerichtete Bewegung einer Anlagefläche (9) zur Folge hat, die sich in der Ausgangsstellung an dem Gehäuse (1) abstützt und an welcher das Tastelement (15) in der Ausgangsstellung anliegt;
daß das Tastelement (15) - ausgehend von dieser Ausgangsstellung - zumindest zeitweilig der Anlagefläche (9) nachführbar ist, und daß die Störfall-Bewegung (23) des Tastelements (15) einen Schaltvorgang auslöst, welcher das Stillsetzen des Schlagwerks ermöglicht.

2. Vorrichtung nach Anspruch 1, dadurch gekennzeichnet, daß jedem Spannelement (4, 5, 6 bzw. 7) ein Sensor (11 bis 14 bzw. 28) zugeordnet ist.

3. Vorrichtung nach zumindest einem der vorherigen Ansprüche , dadurch gekennzeichnet, daß das Tastelement (15) Bestandteil eines Umschalters (11, 12, 13 bzw. 14) ist, über den in der Störstellung eine Energiequelle (19) zu- oder abschaltbar ist.

4. Vorrichtung nach zumindest einem der vorhergehenden Ansprüche, dadurch gekennzeichnet, daß mit der Bewegung des Tastelements (15) in die Störstellung (Pfeil 23) ein für eine Bedienungsperson erkennbares Störsignal auslösbar ist.

5. Vorrichtung nach zumindest einem der vorhergehenden Ansprüche, dadurch gekennzeichnet, daß mit der Bewegung des Tastelements (15) in die Störstellung (Pfeil 23) die Zufuhr der Antriebsenergie für den Betrieb des Schlagwerks unterbrochen wird.

6. Vorrichtung nach zumindest einem der vorhergehenden Ansprüche, dadurch gekennzeichnet, daß die Anlagefläche (9) sich an dem Gehäuse (1) über ein Gegenhalteelement (9a bzw. 8a) abstützt, wobei die von diesem erzeugte Gegenhaltekraft der von dem Spannelement (4, 5, 6 bzw. 7) ausgehenden Spannkraft entgegengerichtet ist.

7. Vorrichtung nach zumindest einem der vorhergehenden Ansprüche, dadurch gekennzeichnet, daß das Tastelement (15) sich an dem letzten Gehäuseabschnitt (1a) befindet, an dem das Spannelement (4, 5, 6 bzw. 7) befestigt ist und welcher auf der vom Werkzeug-Einsteckende abgewandten Seite des Gehäuses (1) liegt.

8. Vorrichtung nach zumindest einem der Ansprüche 1 bis 6, dadurch gekennzeichnet, daß das Tastelement (15) sich an dem Gehäuseabschnitt (1c) befindet, an dem das Spannelement (4, 5, 6 bzw. 7) befestigt ist und welcher auf der dem Werkzeug-Einsteckende zugewandten Seite des Gehäuses (1) liegt.

9. Vorrichtung nach zumindest einem der Ansprüche 1 bis 2 und 4 bis 8, dadurch gekennzeichnet, daß das Tastelement (15) Bestandteil eines Ventilschiebers (28) ist, der entgegen der Spannrichtung des Spannelements (4, 5, 6 bzw. 7) mit einer Gegenhaltekraft beaufschlagt ist und der anläßlich der Störfall-Bewegung des Tastelements eine Verbindung zwischen zwei Kanälen (30, 31) entweder herstellt oder unterbricht.

10. Vorrichtung nach Anspruch 9, dadurch gekennzeichnet, daß der Ventilschieber (28) neben der SpannelementBohrung (1i) angeordnet im Gehäuse (1) geführt ist und das Tastelement (15) an der Auflage (9) anliegt, über welche sich das Spannelement in Spannrichtung am Gehäuse abstützt.

11. Vorrichtung nach zumindest einem der Ansprüche 9 und 10, dadurch gekennzeichnet, daß der Ventilschieber (28) auf der vom Tastelement (15) abgewandten Seite mittels eines Fluids druckbeaufschlagt und gegen das Gehäuse (1) abgedichtet ist.

## Claims

1. Fluid-powered percussion mechanism, in particular a hydraulic hammer, with a multiple part housing, the housing sections of which are fastened to one another by means of clamping elements, with a safety device for monitoring the state of these clamping elements,
characterised in that on at least one housing section (1a) at least one clamping element (4, 5, 6 or 7) belonging to it has a sensor (11 to 14 or 28) allocated to it, and at least when said clamping element is in its defined operational position, the detection element (15) of said sensor is movable longitudinally relative to the clamping element and is held in abutment against it at least indirectly under initial stress; that the structure and arrangement of each sensor (11 to 14 or 28) are such that its detection element (15) is movable between an initial position corresponding to the operational position and a fault position; that each clamping element (4, 5, 6 or 7) is supported in longitudinal direction relative to the housing (1) in such a way that a fault acting in the longitudinal direction of the clamping element causes movement in the same direction of a bearing surface (9), which is supported on the housing (1) in the initial position and against which the detection element (15) abuts in the initial position; that - starting from this initial position - the detection element (15) may follow this bearing surface (9) at least temporarily; and that the movement (23) of the detection element (15) in the case of a fault triggers a switching process enabling the percussion mechanism to stop operation.

2. Device according to Claim 1, characterised in that a sensor (11 to 14 or 28) is allocated to each clamping element (4, 5, 6 or 7).

3. Device according to at least one of the preceding claims, characterised in that the detection element (15) is a component of a changeover switch (11, 12, 13 or 14), by means of which an energy source (19) may be connected or disconnected in the fault position.

4. Device according to at least one of the preceding claims, characterised in that a fault signal recognisable to an operator may be triggered on movement of the detection element (15) into the fault position (arrow 23).

5. Device according to at least one of the preceding claims, characterised in that the supply of actuating energy for operation of the percussion mechanism is cut off on movement of the detection element (15) into the fault position (arrow 23).

6. Device according to at least one of the preceding claims, characterised in that the bearing surface (9) is supported against the housing (1) via a bracing element (9a or 8a), the bracing force generated by this element being directed in the opposite direction to the clamping force applied by the clamping element (4, 5, 6 or 7).

7. Device according to at least one of the preceding claims, characterised in that the detection element (15) is located on the last housing section (1a), to which the clamping element (4, 5, 6 or 7) is fastened and which lies on the side of the housing (1) facing away from the tool chuck.

8. Device according to at least one of Claims 1 to 6, characterised in that the detection element (15) is located on the housing section (1c), to which the clamping element (4, 5, 6 or 7) is fastened and which lies on the side of the housing (1) facing the tool chuck.

9. Device according to at least one of Claims 1 to 2 and 4 to 8, characterised in that the detection element (15) is a component of a slide valve (28), which is subjected to a bracing force contrary to the clamping direction of the clamping element (4, 5, 6 or 7) and which either forms or breaks a connection between two ducts (30, 31) during the movement of the detection element in case of a fault.

10. Device according to Claim 9, characterised in that the slide valve (28) is mounted in the housing (1) adjacent to the clamping element hole (1i) and the detection element (15) abuts against the support (9), via which the clamping element is supported on the housing in clamping direction.

11. Device according to at least one of Claims 9 and 10, characterised in that the slide valve (28) is subjected to pressure by means of a fluid on the side facing away from the detection element (15) and is sealed off from the housing (1).

## Revendications

1. Mécanisme de frappe entraîné par un fluide, en particulier marteau hydraulique, comportant un carter en plusieurs parties, dont les éléments de carter sont fixés les uns aux autres au moyen d'organes de serrage, comportant un dispositif de sécurité pour surveiller l'état de ces organes de serrage,
caractérisé
- en ce que, à au moins un organe de serrage (respectivement 4, 5, 6 ou 7), associé à au moins un élément de carter (1a), est coordiné un capteur (respectivement 11 à 14, et 28) dont, au moins dans la position de fonctionnement prescrite de l'organe de serrage, l'organe de détection (15) est maintenu mobile par rapport à celui-ci dans sa direction longitudinale, et est maintenu, au moins indirectement, sous précontrainte au contact de cet organe;
- en ce que chaque capteur (respectivement 11 à 14 et 28) est réalisé et disposé de telle façon que son organe de détection (15) puisse se déplacer entre une position initiale, correspondant à la position de fonctionnement, et une position de défaut;
- en ce que chaque organe de serrage (respectivement 4, 5, 6 ou 7) prend appui, dans la direction longitudinale, par rapport au carter (1), de telle façon qu'un défaut, agissant suivant la direction longitudinale de chaque organe de serrage, provoque un mouvement de même direction d'une surface d'appui (9), qui s'appuie, dans la position initiale, sur le carter (1) et sur laquelle, dans la position initiale, l'organe de détection (15) est en contact;
- en ce que l'organe de détection (15) - en partant de cette position initiale - peut suivre, au moins temporairement, la surface d'appui (9), et en ce que le mouvement (23) de l'organe de détection (15) correspondant au cas de défaut, déclenche un processus de commutation, qui permet l'arrêt du mécanisme de frappe.

2. Dispositif suivant la revendication 1, caractérisé en ce,qu'à chaque organe de serrage (respectivement 4, 5, 6 ou 7), est associé un capteur (respectivement 11 à 14 et 28).

3. Dispositif suivant au moins l'une des revendications précédentes, caractérisé en ce que l'organe de détection (15) est une pièce constitutive d'un inverseur (respectivement 11, 12, 13, 14), qui, en position de défaut, peut raccorder ou couper une source d'énergie (19).

4. Dispositif suivant au moins l'une des revendications précédentes, caractérisé en ce qu'avec le mouvement de l'organe de détection (15) vers la position de défaut (flèche 23), est déclenché un signal de défaut reconnaissable par le personnel de conduite.

5. Dispositif suivant au moins l'une des revendications précédentes, caractérisé en ce qu'avec le mouvement de l'organe de détection (15) vers la position de défaut (flèche 23), l'alimentation de l'énergie d'entraînement pour le fonctionnement du mécanisme de frappe est interrompue.

6. Dispositif suivant au moins l'une des revendications précédentes, caractérisé en ce que la surface d'appui (9) s'appuie sur le carter (1) par l'intermédiaire d'un organe de contre-appui (respectivement 9a et 8a), la force de contre-appui exercée par ce dernier ayant une direction opposée à la force de serrage provenant de l'organe de serrage (respectivement 4, 5, 6 ou 7).

7. Dispositif suivant au moins l'une des revendications précédentes, caractérisé en ce que l'organe de détection (15) est placé sur le dernier élément de carter (1a), sur lequel l'organe de serrage (respectivement 4, 5, 6 ou 7) est fixé, et qui se trouve du côté du carter (1) opposé à l'extrémité d'emmanchement de l'outil.

8. Dispositif suivant au moins l'une des revendications 1 à 6, caractérisé en ce que l'organe de détection (15) se trouve sur l'élément de carter (1c), sur lequel l'organe de serrage (respectivement 4, 5, 6 ou 7) est fixé, et qui se trouve du côté du carter (1) tourné vers l'extrémité d'emmanchement de l'outil.

9. Dispositif suivant au moins l'une des revendications 1 à 2 et 4 à 8, caractérisé en ce que l'organe de détection (15) est une pièce constitutive d'un coulisseau de soupape (28), qui est soumis à une force de contre-appui dans la direction opposée au serrage de l'organe de serrage (respectivement 4, 5, 6 ou 7) et qui, en fonction du déplacement se produisant en cas de défaut, crée ou interrompt une liaison entre deux canaux (30, 31).

10. Dispositif suivant la revendication 9, caractérisé en ce que le coulisseau de soupape (28), disposé à côté de l'alésage (1i) de l'organe de serrage, est guidé dans le carter (1), et l'organe de détection (15) est au contact de la surface d'appui (9) par laquelle l'organe de serrage s'appuie, dans le sens de serrage, sur le carter.

11. Dispositif suivant au moins l'une des revendications 9 et 10, caractérisé en ce que le coulisseau de soupape (28) est soumis à la pression d'un fluide du côté opposé à l'organe de détection (15) et est étanche par rapport au carter (1).
